# EUROPEAN PATENT APPLICATION

(11) **EP 4 032 935 A1**
(43) Date of publication of application: **27.07.2022**
(21) Application number: 21209673.9
(22) Date of filing: 29.03.2013
(51) Int. Cl.: C08G 69/32, C08G 69/26, C08G 69/28, C08L 77/06, C08L 77/10

(54) **FURAN BASED POLYAMIDES**

(30) Priority: 30.03.2012 US 201261618456 P
(62) Divisional of application: 13717631.9
(71) Applicant: DuPont Industrial Biosciences USA, LLC, Wilmington, Delaware 19805 (US)
(72) Inventor: CHAN, Justin, Wilmington (US); NEDERBERG, Fredrik, Greenville (US); RAJAGOPALAN, Bhuma, Wilington (US); WILLIAMS, Sharlene, Renee, Wilmington (US); COBB, Michael, W, Wilmington (US)
(74) Representative: Mewburn Ellis LLP

(57) **Abstract**

Disclosed herein are compositions and article made therefrom and processes of making them. The composition comprises a polymer, the polymer comprising a repeat unit of formula shown below: wherein the polymer is derived from an aromatic diamine comprising *m*-phenylene diamine, and an aromatic diacid or a derivative thereof comprising furan dicarboxylic acid or derivative thereof.

## Description

This application claims the benefit under 35 U.S.C. §119(e) of U.S. Provisional Application No. 61/618,456, filed March 30, 2012, which is herein incorporated by reference.

### FIELD OF THE INVENTION

This invention relates in general to polyesters and in particular to poly(*m*-phenylene furancarboxylamide) and articles made therefrom.

### BACKGROUND OF THE INVENTION

Aramids are polyamides generated using aromatic acids and/or aromatic diamines. In particular, meta-aramids are polymers made from isophthalyl chloride and *m*-phenylene diamine. These are used in a variety of applications including fibers for textile and other articles. These polymers that have been used over the past few decades are made from fossil fuel derived building blocks. In recent years, sustainable routes have been developed for various bio-derived polymers such as Sorona^{®}, poly (trimethylene terepthatlate) (PTT), poly(lactic acid), bio-derived polyethylene, etc. However, there is very limited work done in increasing bio-content in meta-aramids while maintaining desirable properties.

Hence, there is a need for bio-derived meta-aramids and articles made therefrom.

### SUMMARY OF THE INVENTION

In an aspect of the invention, there is a composition comprising a polymer, the polymer comprising a repeat unit of formula shown below: 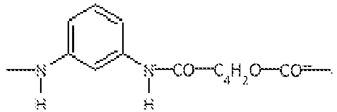 wherein the polymer is derived from:
a. an aromatic diamine comprising *m*-phenylene diamine, and
b. an aromatic diacid or a derivative thereof comprising furan dicarboxylic acid or derivative thereof.

In an embodiment, the polymer is poly(*m*-phenylene 2,5-furancarboxylamide) having the following formula:

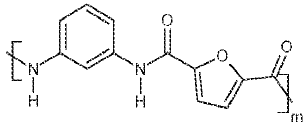

In another embodiment, there is a polymer is a copolymer derived from 2,5-furan diacid chloride, *m*-phenylene diamine, and isophthalic acid.

In an embodiment, there is a process for preparing a polymer composition of the present invention comprising the steps of:
a) dissolving an aromatic diamine monomer in an polar solvent to form a diamine solution under inert atmosphere, wherein the solvent is selected from the group consisting of dimethyl acetamide, dimethyl formamide and dimethyl sulfoxide, and wherein the aromatic diamine comprises *m*-phenylene diamine;
b) adding an aromatic diacid monomer or a derivative thereof to the diamine solution at a temperature in the range of -5-35 °C to form a reaction mixture, wherein the aromatic diacid comprises furan dicarboxylic acid or derivative thereof;
c) continuing the reaction until there is no further increase in temperature or until a desired viscosity of the reaction mixture is achieved; and
d) isolating the polymer from the reaction mixture.

In an aspect, there is a shaped article comprising a polymer comprising repeat units of the following formula: 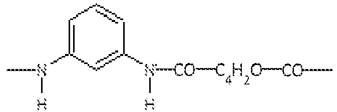 wherein the polymer is derived from
a. an aromatic diamine comprising *m*-phenylene diamine, and
b. an aromatic diacid or a derivative thereof comprising furan dicarboxylic acid or derivative thereof.

In an embodiment, the shaped article is a fiber.

In another embodiment, there is a spun yarn comprising the fiber.

In an embodiment, there is a process for preparing a fiber, the process comprising the step of;
a) forming a fiber mixture of 0.1-50 weight% of a polymer composition of the present invention; and
b) spinning the fiber mixture into a fiber.

### BRIEF DESCRIPTION OF THE DRAWINGS

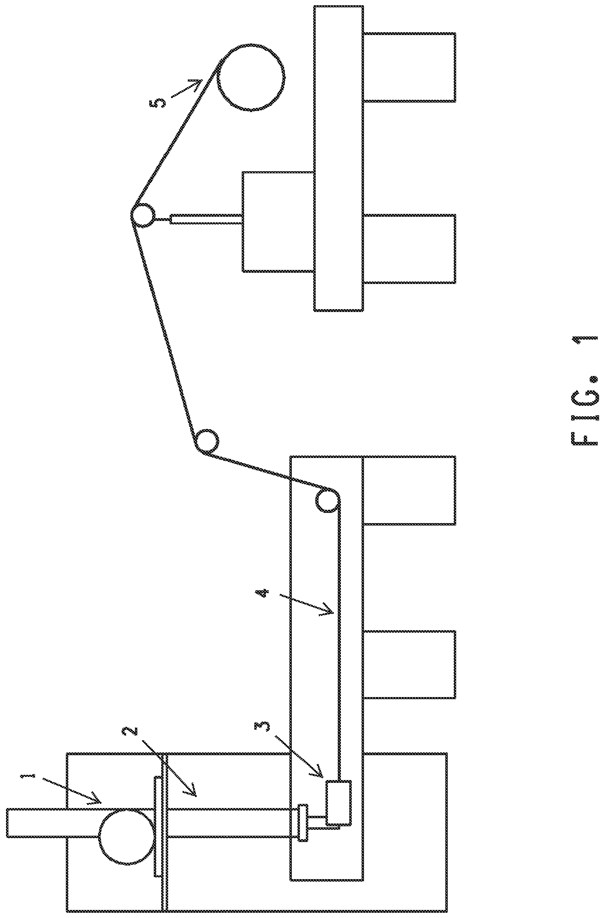

Figure 1 schematically illustrates a set up for spinning fiber.

### DETAILED DESCRIPTION

Disclosed is a composition comprising a polymer comprising a repeat unit of formula shown below: 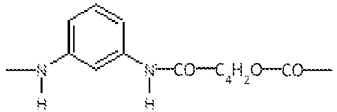 wherein the polymer is derived from an aromatic diamine comprising *m-*phenylene diamine and an aromatic diacid or a derivative thereof comprising furan dicarboxylic acid or a derivative thereof.

In an embodiment, the polymer the is poly(*m*-phenylene 2,5-furancarboxylamide) having the following general structure: 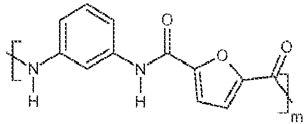 where m= 2-4000 or 50- 1000 or 75-300

As used herein, the term "biologically-derived" is used interchangeably with "bio-derived" and refers to chemical compounds including monomers and polymers, that are obtained from plants and contain only renewable carbon, and not fossil fuel-based or petroleum-based carbon. As used herein, *m-*pheneylene diamine refers to meta-phenylene diamine and *p*-phenylene diamine refers to para-phenylene diamine. As used herein, the term "furan based polymer" is used for the disclosed polymers of the present invention derived from an aromatic diamine comprising *m*-phenylene diamine and an aromatic diacid or a derivative thereof comprising furan dicarboxylic acid or a derivative thereof.

Poly(*m*-phenylene furancarboxylamide) can be derived *m*-phenylene diamine and any suitable isomer of furan dicarboxylic acid, such as, 2,5-furan dicarboxylic acid; 2,4-furan dicarboxylic acid; 3,4-furan dicarboxylic acid; 2,3-furan dicarboxylic acid or their derivatives.

In an embodiment, poly(*m*-phenylene furancarboxylamide) is derived from an aromatic diamine comprising *m*-phenylene diamine and a derivative of furan dicarboxylic acid. A derivative of furan dicarboxylic acid can include an ester or halide formed by substitution at the acid moiety. Hence, derivative of furan dicarboxylic include, but is not limited to furan diacid chloride, furan diesters. Alternatively, in a derivative of 2,5-furan dicarboxylic acid, the hydrogens at the 3 and/or 4 position on the furan ring can, if desired, be replaced, independently of each other, with -CH₃, -C₂H₅, or a C₃ to C₂₅ straight-chain, branched or cyclic alkane group, optionally containing one to three heteroatoms selected from the group consisting of O, N, Si and S, and also optionally substituted with at least one member selected from the group consisting of -Cl, -Br, -F, -I, -OH, -NH₂ and -SH.

The poly(*m*-phenylene furancarboxylamide) as disclosed herein can have a number average molecular weight in the range of 500-1000000 or 12500-250000 or 19000-75000.

In another embodiment, the polymer is a copolymer (random or block) derived from furan dicarboxylic acid, *m*-phenylene diamine and a diacid comonomer. The diacid comonomer can be selected from the group consisting of terephthalic acid, isophthalic acid, phthalic acid, naphthaline diacid, adipic acid, azelic acid, sebacic acid, dodecanoic acid, 1,4-cyclohexane dicarboxylic acid, maleic acid, succinic acid, and 1,3,5-benzenetricarboxylic acid. The molar ratio of furan dicarboxylic acid to the diacid comonomer can be any range, for example the molar ratio of either component can be greater than 1:100 or alternatively in the range of 1:100 to 100 to 1 or 1:9 to 9:1 or 1:3 to 3:1 or 1:1.

Exemplary copolymers derived from furan dicarboxylic acid, *m-*phenylene diamine and a diacid comonomer include, but are not limited to, copolymer of furan dicarboxylic acid, *m*-phenylene diamine and isophthalic acid; copolymer of furan dicarboxylic acid, *m*-phenylene diamine and terephthalic acid; copolymer of furan dicarboxylic acid, *m*-phenylene diamine and adipic acid; copolymer of furan dicarboxylic acid, *m*-phenylene diamine and succinic acid; copolymer of furan dicarboxylic acid, *m*-phenylene diamine and azelic acid; copolymer of furan dicarboxylic acid, *m*-phenylene diamine and sebacic acid; copolymer of furan dicarboxylic acid, *m*-phenylene diamine and dodecanoic acid; copolymer of furan dicarboxylic acid, *m*-phenylene diamine and 1,4-cyclohexane dicarboxylic acid; copolymer of furan dicarboxylic acid, *m*-phenylene diamine and maleic acid; copolymer of furan dicarboxylic acid, *m*-phenylene diamine and 1,3,5-benzenetricarboxylic acid.

In an embodiment, the polymer is a copolymer derived from 2,5-furan diacid chloride, *m*-phenylene diamine and isophthalic acid, having the following general formula: 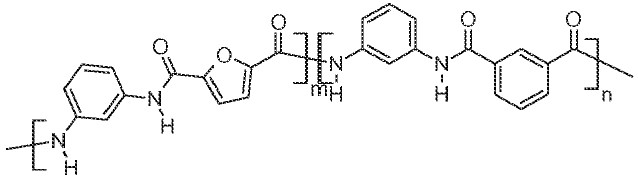 where m> 1 and m+n= 2-4000 or 50-1000 or 75-300

The molar ratio of 2,5-furan dicarboxylic acid to isophthalic acid in the copolymer can be in any range, for example the molar ratio of either component can be greater than 1:100 or alternatively in the range of 1:100 to 100 to 1 or 1:9 to 9:1 or 1:3 to 3:1 or 1:1.

In another embodiment, the polymer is a copolymer derived from 2,5-furan diacid chloride, *m*-phenylene diamine, and terephthalic acid, having the following general formula. The molar ratio of 2,5-furan dicarboxylic acid to terephthalic acid can be any range, for example the molar ratio of either component can be greater than 1:100 or alternatively in the range of 1:100 to 100 to 1 or 1:9 to 9:1 or 1:3 to 3:1 or 1:1. 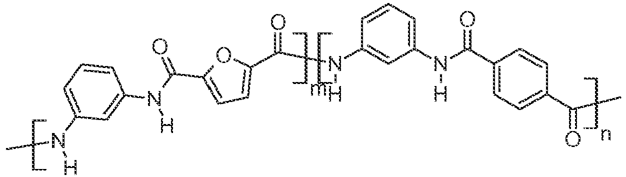 where m> 1 and m+n= 2-4000 or 50-1000 or 75-300

Examples of various hydroxy acids that can be included, in addition to the furan dicarboxylic acids, in the polymerization monomer makeup from which a copolymer can be made include glycolic acid, hydroxybutyric acid, hydroxycaproic acid, hydroxyvaleric acid, 7-hydroxyheptanoic acid, 8-hydroxycaproic acid, 9-hydroxynonanoic acid, or lactic acid; or those derived from pivalolactone, ε-caprolactone or L,L, D,D or D,L lactides.

In one embodiment, the polymer is a copolymer (random or block) derived from furan dicarboxylic acid, *m*-phenylene diamine and a diamine comonomer. Any suitable diamine comonomer (H₂N-M-NH₂) can be used, where M is a cyclic or acyclic aliphatic or aromatic group.

Any suitable aliphatic diamine comonomer (H₂N-M-NH₂), such as those with 2 to 12 number of carbon atoms in the main chain can be used. Suitable aliphatic diamines include, but are not limited to 1,2-ethylenediamine; 1,6-hexamethylenediamine; 1,5-pentamethylenediamine; 1,4-tetramethylenediamine; bis(aminomethyl)cyclohexane; 5-amino-1,3,3-trimethyl cyclohexanemethanamine; 1,12-dodecanediamine; and mixtures thereof.

Any suitable aromatic diamine comonomer (H₂N-M-NH₂), such as those with ring sizes between 6 and 10 can be used. Suitable aromatic diamines include, but are not limited to *p*-phenylenediamine; *m*-xylylenediamine; 3,3'-dimethylbenzidine; 2,6-naphthylenediamine; 4,4'-diamiriodiphenyl ether; 4,4'-diaminodiphenyl sulfone; 1,12-dodecanediamine and mixtures thereof.

In one embodiment, the polymer is a copolymer (random or block) derived from furan dicarboxylic acid, *m*-phenylene diamine, and *p*-phenylene diamine as a comonomer, where the molar ratio of *m*-phenylene diamine and *p*-phenylene diamine can be any range, for example the molar ratio of either component can be greater than 1:100 or alternatively in the range of 1:100 to 100 to 1 or 1:9 to 9:1 or 1:3 to 3:1 or 1:1. In another embodiment, the polymer is a copolymer (random or block) of 2,5-furan dicarboxylic acid, *m*-phenylene diamine, and *p*-phenylene diamine having the following general structure: 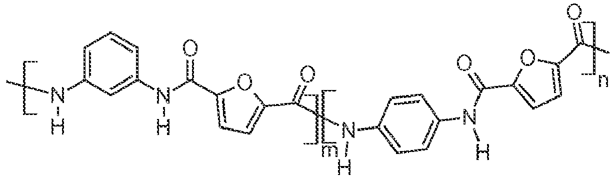 m>1 and m+n= 2-4000 or 50-1000 or 75-300

There is also disclosed herein a process for preparing a polymer by contacting an aromatic diamine with furan dicarboxylic acid or a derivative thereof in a reaction mixture that comprises a polar solvent having a boiling point exceeding 160 °C.

In an aspect, there is a process for preparing a polymer compositionas disclosed herein above. The process comprises dissolving an aromatic diamine monomer in an polar solvent to form a diamine solution under inert atmosphere, wherein the aromatic diamine comprises *m*-phenylene diamine. Any suitable polar solvent can be selected from the group consisting of dimethyl acetamide, dimethyl formamide and dimethyl sulfoxide. The process further comprises adding an aromatic diacid monomer or a derivative thereof to the diamine solution at a temperature in the range of -5-35 °C or 0-5 °C to form a reaction mixture, wherein the aromatic diacid comprises furan dicarboxylic acid or derivative thereof. The process also comprises continuing the reaction until there is no further increase in temperature or until a desired viscosity of the reaction mixture is achieved and isolating the polymer from the reaction mixture. In an embodiment, the process further comprises adding a salt to the diamine solution before the step of adding an aromatic diacid monomer, wherein the salt comprises salts of alkali metal ions and salts of alkaline earth metal ions. Suitable salts include oxides and chlorides of group alkali and alkaline earth metals including, but not limited to, lithium chloride, calcium oxide. In another embodiment, the process comprises adding a salt to the reaction mixture, wherein the salt comprises salts of alkali metal ions and salts of alkaline earth metal ions.

The monomers are as noted above, and the solvent can be dimethylacetamide (DMAc), and can optionally additionally contain a metallic chloride compound such as lithium chloride, calcium chloride, sodium chloride. The furan diacrboxylic acid (FDCA) or ester is first derivitized to its acid chloride (FDC-Cl) by reaction with compounds such as oxalyl chloride or SOCl₂. The process comprises adding amine monomer i.e., *m*-phenylene diamine (MPD) to anhydrous DMAc under nitrogen atmosphere. The mixture of MPD and DMAc is stirred until MPD completely dissolves. The solution of MPD in DMAc is collected in an ice-bath at a temperature in the range of about 0-5 °C. The FDC-CI is then slowly added into this solution under well-mixed conditions and under nitrogen and the reaction is initiated. The reaction is accompanied by an exothermic rise in temperature. The reaction is allowed to occur until desired viscosity is attained and/or until the rise in temperature reaches a stable value. The ice bath is then removed. The mixture is left to sit for a fixed duration of time typically 10-30 minutes during which the polymer formed may form a gel. To this polymer additional solvent such as DMAc and salts such as CaO are added. Addition of the solvent helps reduce the viscosity to form a slurry of the polymer and salt in the solvent. The slurry then becomes a clear solution. Alternatively the salt such as LiCl can be added at the beginning of the reaction with the amine addition.

2,,5-furandicarboxylic acid (FDCA), a bifunctional aromatic diacid made from sugars has recently gained much attention. In this work, we demonstrate use of 2,5 furan dicarboxylic acid and its derivatives as monomers to produce series of meta-aramid and meta-aramid copolymers. These FDCA based meta-aramids have been produced in high molecular weights and display desirable properties.

In an aspect, the polymers described herein can be formed into a shaped article, such as films, fibrids, fibers for floc, and fibers for textile uses. It can be spun into fibers via solution spinning, using a solution of the polymer in either the polymerization solvent or another solvent for the polymer. Fiber spinning can be accomplished through a multi-hole spinneret by dry spinning, wet spinning, or dry-jet wet spinning (also known as air-gap spinning) to create a multi-filament yarn or tow as is known in the art.

In an embodiment, the fiber of the present invention has a fiber denier in the range of 1-100 or 2-40.

Shaped articles as described herein include extruded or blown shapes or films, molded articles, and the like. Films can be made by any known technique such as casting the dope onto a flat surface, extruding the dope through an extruder to form a film or extruding and blowing the dope film to form an extruded blown film. Typical techniques for dope film extrusion include processes similar to those used for fibers, where the solution passes through a spinneret or die into an air gap and subsequently into a coagulant bath. More details describing the extrusion and orientation of a dope film can be found in Pierini et al. (U. S. Pat. No. 5,367,042); Chenevey, (4,898,924); Harvey et al., (4,939, 235); and Harvey et al., (4,963,428). Typically the dope film prepared is preferably no more than about 250 mils (6.35 mm) thick and more preferably it is at most about 100 mils (2.54 mm) thick.

"Fiber" is defined as a relatively flexible, unit of matter having a high ratio of length to width across its cross-sectional area perpendicular to its length. Herein, the term "fiber" is used interchangeably with the term "filament" or "end" or "continuous filament". The cross section of the filaments described herein can be any shape, such as circular or bean shaped, but is typically generally round, and is typically substantially solid and not hollow. Fiber spun onto a bobbin in a package is referred to as continuous fiber. Fiber can be cut into short lengths called staple fiber. Fiber can be cut into even smaller lengths called floc. Yarns, multifilament yarns or tows comprise a plurality of fibers. Yarn can be intertwined and/or twisted.

"Dry spinning" means a process for making a filament by extruding a solution into a heated chamber having a gaseous atmosphere to remove the solvent, leaving a solid filament. The solution comprises a fiber-forming polymer in a solvent which is extruded in a continuous stream through one or more spinneret holes to orient the polymer molecules. This is distinct from "wet spinning" or "air-gap spinning" wherein the polymer solution is extruded into a liquid precipitating or coagulating medium to regenerate the polymer filaments. In other words, in dry spinning a gas is the primary solvent extraction medium, and in wet spinning a liquid is the primary solvent extraction medium. In dry spinning, after formation of solid filaments, the filaments can then be treated with a liquid to either cool the filaments or wash the filaments to further extract remaining solvent.

The fibers in the multi-filament yarn, or tow, after spinning can then be treated to neutralize, wash, dry, or heat treat the fibers as needed using conventional technique to make stable and useful fibers. The fibers formed from the polymers described herein are useful in a variety of applications. They are colorless, or colorless to white in color, although impurities can impart discoloration.

In an aspect, there is a process for preparing a fiber, the process comprising the step of forming a fiber mixture of 0.1-50 weight% 0.1-25 weight% of polymer composition disclosed hereinabove and spinning the fiber mixture into a fiber.

In one embodiment, the fibers can be spun from 3 to 25 wt% polymer solutions in DMAc using a spinneret with 1-50 holes having diameter of 0.003" or 0.008". The volumetric flow rate of spinning solution is typically 0.3-2 mL/min. The fiber is then extruded directly into a coagulation bath filled with a room temperature or elevated temperature or sub-ambient temperature solution containing 0-90 wt% DMAc, or other appropriate coagulating solvents. The number, size, shape, and configuration of the orifices can be varied to achieve the desired fiber product. The extruded dope is fed into a coagulation bath with or without prior passage through a noncoagulating fluid layer. The noncoagulating fluid layer is generally air but can be any other inert gas or liquid which is a noncoagulant for the dope.

The fibers and/or film can contain common additives such as dyes, pigments, antioxidants, delusterants, antistatic agents, and U.V. stabilizers, added either to the spin solution, dope or to the coagulation bath, or coated on the fiber during or after the spinning process.

As used herein, the term "staple fibers" refers to fibers that are cut to a desired length or are stretch broken, or fibers that occur naturally with or are made having a low ratio of length to the width of the cross-sectional area perpendicular to that length when compared with filaments. Man-made staple fibers are cut or made to a length suitable for processing on cotton, woolen, or worsted yarn spinning equipment. The staple fibers can have (a) substantially uniform length, (b) variable or random length, or (c) subsets of the staple fibers have substantially uniform length and the staple fibers in the other subsets have different lengths, with the staple fibers in the subsets mixed together forming a substantially uniform distribution.

In some embodiments, suitable staple fibers have a length of about 0.25 centimeters (0.1 inches) to about 30 centimeters (12 inches). In some embodiments, the length of a staple fiber is from about 1 cm (0.39 in) to about 20 cm (8 in). In some preferred embodiments the staple fibers made by short staple processes have a staple fiber length of about 1 cm (0.39 in) to about 6 cm (2.4 in).

The staple fibers can be made by any process. For example, the staple fibers can be cut from continuous straight fibers using a rotary cutter or a guillotine cutter resulting in straight (i.e., non crimped) staple fiber, or additionally cut from crimped continuous fibers having a saw tooth shaped crimp along the length of the staple fiber, with a crimp (or repeating bend) frequency of preferably no more than 8 crimps per centimeter.

The staple fibers can also be formed by stretch breaking continuous fibers resulting in staple fibers with deformed sections that act as crimps. Stretch broken staple fibers can be made by breaking a tow or a bundle of continuous filaments during a stretch break operation having one or more break zones that are a prescribed distance creating a random variable mass of fibers having an average cut length controlled by break zone adjustment.

Spun staple yarn can be made from staple fibers using traditional long and short staple ring spinning processes that are well known in the art. For short staple, cotton system spinning fiber lengths from about 1.9 to 5.7 cm (0.75 in to 2.25 in) are typically used. For long staple, worsted or woolen system spinning, fibers up to about 16.5 cm (6.5 in) are typically used. However, this is not intended to be limiting to ring spinning because the yarns may also be spun using air jet spinning, open end spinning, and many other types of spinning which converts staple fiber into useable yarns.

Spun staple yarns can also be made directly by stretch breaking using stretch-broken tow to top staple processes. The staple fibers in the yarns formed by traditional stretch break processes typically have length of up to about 18 cm (7 in) long. However spun staple yarns made by stretch breaking can also have staple fibers having maximum lengths of up to around 50 cm (20 in.) through processes as described for example in PCT Patent Application No. WO 0077283. Stretch broken staple fibers normally do not require crimp because the stretch-breaking process imparts a degree of crimp into the fiber.

The staple fibers can also be formed by stretch breaking continuous fibers resulting in staple fibers with deformed sections that act as crimps. Stretch broken staple fibers can be made by breaking a tow or a bundle of continuous filaments during a stretch break operation having one or more break zones that are a prescribed distance creating a random variable mass of fibers having an average cut length controlled by break zone adjustment.

The term continuous filament refers to a flexible fiber having relatively small-diameter and whose length is longer than those indicated for staple fibers. Continuous filament fibers and multifilament yarns of continuous filaments can be made by processes well known to those skilled in the art.

Many different fibers can be used as the textile staple fiber. In some embodiments aramid fiber can be used in the blend as the textile staple fiber. In some preferred embodiments meta-aramid fibers are used in the blend as the textile staple fiber. By aramid is meant a polyamide wherein at least 85% of the amide (-CONH-) linkages are attached directly to two aromatic rings. A meta-aramid is such a polyamide that contains a meta configuration or meta-oriented linkages in the polymer chain. Additives can be used with the aramid and, in fact it has been found that up to as much as 10 percent, by weight, of other polymeric material can be blended with the aramid. This fiber may be spun by dry or wet spinning using any number of processes; United States Patent Nos. 3,063,966 and 5,667,743 are illustrative of useful processes.

In some preferred embodiments the various types of staple fibers are present as a staple fiber blend. By fiber blend it is meant the combination of two or more staple fiber types in any manner. Preferably the staple fiber blend is an "intimate blend", meaning the various staple fibers in the blend form a relatively uniform mixture of the fibers. In some embodiments the two or more staple fiber types are blended prior to or while the yarn is being spun so that the various staple fibers are distributed homogeneously in the staple yarn bundle.

Fabrics can be made from the spun staple yarns and can include, but is not limited to, woven or knitted fabrics. General fabric designs and constructions are well known to those skilled in the art. By "woven" fabric is meant a fabric usually formed on a loom by interlacing warp or lengthwise yarns and filling or crosswise yarns with each other to generate any fabric weave, such as plain weave, crowfoot weave, basket weave, satin weave, twill weave, and the like. Plain and twill weaves are believed to be the most common weaves used in the trade and are preferred in many embodiments.

By "knitted" fabric is meant a fabric usually formed by interlooping yarn loops by the use of needles. In many instances, to make a knitted fabric spun staple yarn is fed to a knitting machine which converts the yarn to fabric. If desired, multiple ends or yarns can be supplied to the knitting machine either plied of unplied; that is, a bundle of yarns or a bundle of plied yarns can be co-fed to the knitting machine and knitted into a fabric, or directly into a article of apparel such as a glove, using conventional techniques. In some embodiments it is desirable to add functionality to the knitted fabric by co-feeding one or more other staple or continuous filament yarns with one or more spun staple yarns having the intimate blend of fibers. The tightness of the knit can be adjusted to meet any specific need. A very effective combination of properties for protective apparel has been found in for example, single jersey knit and terry knit patterns.

In one embodiment the fiber mixture of the polymeric staple fiber and the textile staple fiber is formed by making an intimate blend of the fibers. If desired, other staple fibers can be combined in this relatively uniform mixture of staple fibers. The blending can be achieved by any number of ways known in the art, including processes that creel a number of bobbins of continuous filaments and concurrently cut the two or more types of filaments to form a blend of cut staple fibers; or processes that involve opening bales of different staple fibers and then opening and blending the various fibers in openers, blenders, and cards; or processes that form slivers of various staple fibers which are then further processed to form a mixture, such as in a card to form a sliver of a mixture of fibers. Other processes of making an intimate fiber blend are possible as long as the various types of different fibers are relatively uniformly distributed throughout the blend. If yarns are formed from the blend, the yarns have a relatively uniform mixture of the staple fibers also. Generally, in most preferred embodiments the individual staple fibers are opened or separated to a degree that is normal in fiber processing to make a useful fabric, such that fiber knots or slubs and other major defects due to poor opening of the staple fibers are not present in an amount that detract from the final fabric quality.

In a preferred process, the intimate staple fiber blend is made by first mixing together staple fibers obtained from opened bales, along with any other staple fibers, if desired for additional functionality. The fiber blend is then formed into a sliver using a carding machine. A carding machine is commonly used in the fiber industry to separate, align, and deliver fibers into a continuous strand of loosely assembled fibers without substantial twist, commonly known as carded sliver. The carded sliver is processed into drawn sliver, typically by, but not limited to, a two-step drawing process.

Spun staple yarns are then formed from the drawn sliver using techniques including conventional cotton system or short-staple spinning processes such as open-end spinning and ring-spinning; or higher speed air spinning techniques such as Murata air-jet spinning where air is used to twist the staple fibers into a yarn. The formation of spun yarns can also be achieved by use of conventional woolen system or long-staple processes such as worsted or semi-worsted ring-spinning or stretch-break spinning. Regardless of the processing system, ring-spinning is the generally preferred method for making the spun staple yarns.

There is also disclosed herein a method for making a fiber by forming solution from a polymer that comprises units derived from an aromatic diamine and units derived from 2,5-furan dicarboxylic acid or a derivative and a solvent, and pumping the solution through a spinneret to form a fiber having a denier of less than 100. The monomers and solvents are as noted above. Articles made from these fibers include paper, woven and non-woven fabrics for various endues applications similar to meta-aramids.

### EXAMPLES

### ¹H-NMR Spectroscopy

¹H-NMR and ¹³C-NMR spectra were recorded on a 400 MHz NMR in either deuterated chloroform (CD₂Cl₂). Proton chemical shifts are reported in ppm using the resonance of the deuterated solvent as internal standard. Thermal transitions of the polymer were determined by differential scanning calorimetry (DSC) performed according to ASTM D3418-08.

### MATERIALS

As used in the Examples below, 2,5 furan dicarboxylic acid (99+% purity) was obtained from AstaTech Inc. (Bristol, PA). Thionyl chloride (>99% purity), Pentane (anhydrous, >99% purity), Calcium oxide (99.995% on trace metal basis), Dimethyl acetamide (DMAc) (anhydrous, 99.8% purity), and Lithium chloride (>99%) were procured from Aldrich. Dimethyl formamide (extra dry, 99.8% purity) was procured from ACROS Organics. Meta Phenylene Diamine (MPD) (> 99% purity) was obtained from DuPont (Wilmington, DE). The chemicals were used as received unless otherwise specified. Lithium chloride was dried in a vacuum oven prior to use.

### Example 1.1: Preparation of Furan based polyamide from MPD and FDC-Cl

### A. Preparation of Furan diacid chloride (FDC-Cl)

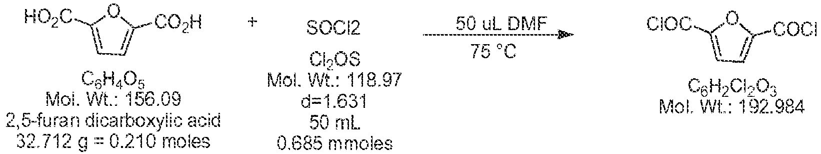

Using oven dried equipment in a dry box, a 250 mL round bottom flask with a magnetic stir bar and reflux condenser was charged with 32.712 g (0.210 moles) of 2,5-furandicarboxylic acid and 50 mL (81.55 g, 0.685 moles) of thionyl chloride. The mixture was removed from the dry box and placed under static nitrogen. Then, 50 uL of anhydrous DMF was added and the mixture was placed into an oil bath set at 70°C. The white slurry slowly turned into a clear yellow solution. The mixture was heated in the 70°C for 20 hours and then returned to the dry box. Long crystals formed as the reaction mixture cooled to room temperature. Then, about 40 mL of pentane was added and the mixture was stirred for 2 hours. The white solid was filtered and washed with 20 mL of anhydrous pentane three times. The solid was dried at room temperature under high vacuum. The solid was confirmed to be the acid chloride using LCMS technique. ¹H-NMR (CH₂Cl₂-d) δ: 7.49 (s, 2H), ¹³C-NMR (CH₂Cl₂-d) δ: 124.04 (-CH), 149.71 (-C-), 156.36 (C=O).

### B. Preparation of Furan based polyamide from MPD and FDC-Cl

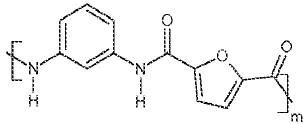

**Table 1: Starting materials for polymerization of MPD and FDC-Cl**

| Name: | Furan diacid chloride (FDC-Cl) | MPD (Meta Phenylene Diamine) | CaO | DMAc |
|---|---|---|---|---|
| Mw | 192.984 | 108.141 | 56.08 | 87.12 |
| Amount (g) | 11.579 | 6.488 | 3.365 | 69.848 |
| Molar equivalent | 0.060 | 0.060 | 0.060 | 31.094 |

Solid MPD and DMAc (Anhydrous, 0.005%) were added to a dried 250 mL, 3-neck round bottom flask equipped with a mechanical stirrer, nitrogen inlet, and reagent addition ports. The ingredients were mixed together thoroughly under nitrogen until the MPD is completely dissolved. The solution was then cooled to 5 °C (ice bath). To this solution, FDC-Cl was added and the solution was stirred at 5 °C and the reaction exothermed to a maximum of 60.2 °C. After reacting in the ice bath for ∼10 minutes, the ice bath was removed. The reaction temperature of the clear yellow viscous solution was found to be 26.7 °C. After another -10 minutes the mixture had gelled, attached to the stir rod and was no longer mixing. A 1.685 g sample was removed which was dissolved in 1.681 g of hot DMAc into a clear yellow, very low viscosity solution. To the off-white gel was added 3.365 g of CaO and an additional 31.094 g of DMAc. As the reaction began to become a slurry it also began to exotherm. The slurry slowly became a clear yellow, low viscosity solution. The weight average molecular weight M_{w} of the polymer was 37000 g/mol, as determined by Gel Permeation chromatography (GPC). T_{g} was ca. 294°C (DSC, 10°C/min, 2^{nd} heat)

### Example 1.2 Preparation of Furan based polyamide from MPD and FDC-Cl using salts

**Table 2: Starting materials for polymerization of MPD and FDC-Cl**

| Name: | Furan diacid chloride (FDC-Cl) | MPD (Meta Phenylene Diamine) | LiCl DMAc | | CaO |
|---|---|---|---|---|---|
| Mw | 192.984 | 108.141 | 42.39 | 87.12 | 56.08 |
| Amount (g) | 11.579 | 6.488 | 2.543 | 69.848 | 3.365 |
| Molar equivalent | 0.060 | 0.060 | 0.060 | 31.094 | 0.06 |

To a dried 250 mL, 3-neck round bottom flask equipped with a mechanical stirrer, nitrogen inlet, and reagent addition ports are added solid MPD, LiCl and DMAc (Anhydrous, 0.005 %). The ingredients were mixed together thoroughly under nitrogen until the MPD and LiCl was completely dissolved. The solution was then cooled to 5 °C (ice bath). To this solution, FDC-Cl was added and the solution was stirred at 5°C and the reaction exothermed to a maximum of 59.9 °C. The reaction solution became yellow and then opaque. The viscous mixture was removed from the ice bath when the internal temperature had decreased to 36 °C. After stirring for an additional 120 minutes, the solid calcium oxide was added and the mixture exothermed to 49 °C. The mixture was then stirred for an additional 60 minutes. The reaction mixture contained a lot of trapped bubbles and by reducing the stir rate during the final 30 minutes of mixing it became much less opaque in appearance and basically clear yellow with bubbles. The weight average molecular weight of the polymer as determined by Gel Permeation chromatography (GPC) was 38000 g/mol. T_{g} was ca. 293 °C (DSC, 10°C/min, 2^{nd} heat)

### Example 2: Preparation of Furan based Copolymer from MPD, isophthaloyl chloride (IPL) and FDC-Cl using salts

A copolymer composition consisting of FDC-Cl, isophthaloyl chloride (IPL) and metaphenylene diamine was synthesized per procedure in Example 1.2 by replacing 50% of FDC-Cl with IPL. The weight average molecular weight of the polymer as determined by Gel Permeation chromatography (GPC) was 100994 g/mol. T_{g} was ca. 279.1 °C (DSC, 10°C/min, 2^{nd} heat)

### Comparative example A: Polyaramid of IPL and MPD

A polyaramid was made only from isophthalic acid and *m*-phenylene diamine using procedure identical to Example 1.2.

### Example 3: Fiber spinning and fiber properties of Furan based Copolymers of FDC-Cl, MPD and IPL

One particular method for spinning fibers herein involves spinning from DMAc/LiCl/CaCl2 solutions containing 10∼15 wt % polymer. The polymer used in these runs is made according to Example 2. The set up used to spin fibers is shown schematically in Figure 1. The solution can be delivered by a gear pump 1 and resides in the spin cell 2 before it exits through a spinneret 3 with 1 hole having diameter of 0.005". The jet velocity of the spinning solution range can be 100-300 ft/min. The fiber can be extruded directly into a coagulation bath 4 filled 20 with room temperature de-ionized water. Fiber residence time in the coagulation bath can be between 15 and 60 seconds. The fiber can be taken from the coagulation bath through a ceramic guide. The fiber can be wound onto a polyethylene terepthalate bobbin 5 at a speed of 60-250 ft/min. The wound fiber bobbins can then be washed and soaked in de-ionized water and air dried at room temperature in a series of batch steps.

Fibers were spun from polymers as described herein above by a method in which 15 wt% solids (includes polymer and salts) a hole diameter of 0.005, a jet velocity of 100 fpm, an airgap length of 1.00 inch, a room temperature water bath length of 4.5 feet. Other conditions and fiber properties are given in Table 3 below.

### Comparative example B: Fiber spinning and fiber properties of Polyaramid of IPL and MPD

Fibers were spun using procedure identical to Example 3 using polyaramid of Comparative Example A. Conditions and fiber properties are given in Table 3 below.

**Table 3: Summary of wet spinning of FDCA based meta-aramids**

| **Sample** | **Polymer used** | **polymer solvent** | **windup speed** | **Denier** | **Tenacity (gf/d)** | **Elongation (%)** | **Modulus (gf/d)** |
|---|---|---|---|---|---|---|---|
| 3.1 | Example 2: Copolymer 50/50 FDCA/IPL with MPD | DMAc (2.74% LiCl) | 62 | 31.62±1.95 | 0.28±0.02 | 24.09±10.65 | |
| 3.2 | | | 120 | 17.52±2.47 | 0.39±0.08 | 56.94±16.49 | |
| 3.3 | | | 200 | 10.73±1.66 | 0.55±0.07 | 35.22±9.38 | 20.25±2.29 |
| 3.4 | | | 253 | 7.89±0.86 | 0.68±0.09 | 26.89+7.14 | 23.28±4.58 |
| Comparative Example B.1 | Comparative Example- A Meta-aramid of MPD and ILP | DMAc (2.77% LiCl) | 65 | 29.67±1.28 | 0.49±0.08 | 72.15±21.74 | 16.76±3.05 |
| Comparative Example B.2 | | | 120 | 17.37±2.14 | 0.50±0.07 | 82.78±23.55 | 14.11±4.65 |
| Comparative Example B.3 | | | 190 | 10.34±1.51 | 0.81±0.09 | 105.49±34.91 | 25.88+6.30 |
| Comparative Example B.4 | | | 250 | 8.87±0.62 | 0.87±0.1 | 110.30±39.8 | 20.60+3.50 |

From Table 3, it is evident that the copolymer made from FDC-Cl, MPD and IPL and can be successfully spun into fibers. Fibers (Examples 3.1-3.4) made from the furan copolymer have similar deniers and mechanical properties to the comparative non-furan based polyaramid (Comparative Examples B.1-B.4) at various windup speeds.

he following numbered clauses contain further statements of various aspects of the present invention:-

## Claims

1. A composition comprising a polymer, the polymer comprising a repeat unit of formula shown below: 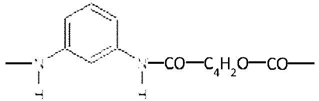 wherein the polymer is derived from:
a. an aromatic diamine comprising m-phenylene diamine, and
b. an aromatic diacid or a derivative thereof comprising furan dicarboxylic acid or derivative thereof.

2. The composition of Claim 1, wherein the polymer is poly(m-phenylene 2,5-furancarboxylamide) having the following formula:

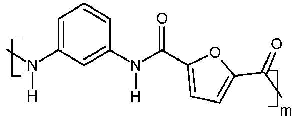

3. The composition of Claim 1, wherein the aromatic diamine further comprises a diamine comonomer selected from the group consisting of *p-*phenylenediamine, *m*-xylylenediamine; 3,3'-dimethylbenzidine; 2,6-naphthylenediamine; 4,4'-diaminodiphenyl ether; 4,4'-diaminodiphenyl sulfone; 1,12-dodecanediamine; 1,2-ethylenediamine; 1,6-hexamethylenediamine; 1,5-pentamethylenediamine; 1,4-tetramethylenediamine; bis(aminomethyl)cyclohexane; 5-amino-1,3,3-trimethyl cyclohexanemethanamine; 1,12-dodecanediamine; and mixtures thereof.

4. The composition of Claim 1, wherein the aromatic diacid further comprises a diacid comonomer selected from the group consisting of terephthalic acid, isophthalic acid, phthalic acid, naphthaline diacid, adipic acid, azelic acid, sebacic acid, dodecanoic acid, 1,4-cyclohexane dicarboxylic acid, maleic acid, succinic acid, and 1,3,5-benzenetricarboxylic acid.

5. The composition of Claim 1, wherein the polymer is a copolymer derived from 2,5-furan diacid chloride, *m*-phenylene diamine, and isophthalic acid.

6. A process for preparing a polymer composition of Claim 1 comprising the steps:
e) dissolving an aromatic diamine monomer in an polar solvent to form a diamine solution under inert atmosphere, wherein the solvent is selected from the group consisting of dimethyl acetamide, dimethyl formamide and dimethyl sulfoxide, and wherein the aromatic diamine comprises *m*-phenylene diamine;
f) adding an aromatic diacid monomer or a derivative thereof to the diamine solution at a temperature in the range of -5-35 °C to form a reaction mixture, wherein the aromatic diacid comprises furan dicarboxylic acid or derivative thereof;
g) continuing the reaction until there is no further increase in temperature or until a desired viscosity of the reaction mixture is achieved; and
h) isolating the polymer from the reaction mixture.

7. The process of Claim 6 further comprising adding a salt to the diamine solution before the step of adding an aromatic diacid monomer, wherein the salt comprises salts of alkali metal ions and alkaline earth metal ions.

8. The process of Claim 6 further comprising adding a salt to the reaction mixture, wherein the salt comprises salts of alkali metal ions and alkaline earth metal ions.

9. A shaped article comprising a polymer according to any one of claims 1 to 4.

10. The shaped article of Claim 9 that is a fiber.

11. A spun yarn comprising the fiber of Claim 10.

12. A woven fabric comprising the yarn of Claim 11.

13. A garment comprising the yarn of Claim 11.

14. A non-woven web comprising the fiber of Claim 10.

15. A process for preparing a fiber, the process comprising the step of;
a) forming a fiber mixture of 0.1-50 weight% of a polymer composition of Claim 1; and
b) spinning the fiber mixture into a fiber.
